# EUROPÄISCHE PATENTSCHRIFT

(11) **EP 2 206 220 B1**
(45) Veröffentlichungstag und Bekanntmachung des Hinweises auf die Patenterteilung: **12.12.2012**
(21) Anmeldenummer: 08802824.6
(22) Anmeldetag: 08.10.2008
(51) Int. Cl.: H02K 1/27, H02K 1/28, H02K 7/14, A61C 1/06, A61C 1/18

(54) **ROTOR FÜR ELEKTROMOTOR, ELEKTROMOTOR UND ZAHNÄRZTLICHES HANDSTÜCK**
ROTOR FOR ELECTRIC MOTOR, ELECTRIC MOTOR AND DENTISTRY HANDPIECE
ROTOR POUR MOTEUR ÉLECTRIQUE, MOTEUR ÉLECTRIQUE ET PIÈCE À MAIN DE DENTISTERIE

(30) Priorität: 19.10.2007 DE 102007050161; 21.12.2007 DE 102007062010
(43) Veröffentlichungstag der Anmeldung: 14.07.2010
(73) Patentinhaber: Kaltenbach & Voigt GmbH, 88400 Biberach (DE)
(72) Erfinder: KUHN, Bernhard, 88400 Biberach (DE); KLEE, Alexander, 88400 Biberach (DE); CLASSEN, Thomas, 88518 Hebertingen (DE)
(74) Vertreter: Thun, Clemens
(86) Internationale Anmeldenummer: PCT/EP2008/008485
(87) Internationale Veröffentlichungsnummer: WO 2009/052948

(56) Entgegenhaltungen:
- DE-A1- 3 622 231
- DE-A1- 4 331 803
- DE-A1- 10 314 394
- DE-A1- 19 644 491
- US-A- 5 053 664

## Beschreibung

Die Erfindung betrifft einen Rotor für einen Elektromotor, einen entsprechenden Elektromotor, sowie ein zahnärztliches Handstück mit einem derartigen Elektromotor.

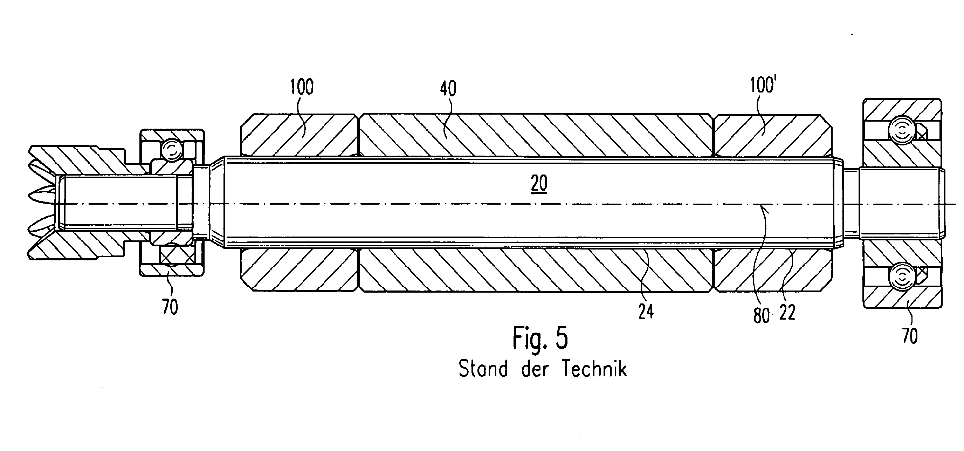

Wie in Fig. 5 skizziert, umfasst ein Rotor eines Elektromotors, beispielsweise in Form eines kollektorlosen Elektromotors, üblicherweise eine Welle 20, auf der ein Magnet 40 zwischen zwei Wuchtringen 100, 100' angeordnet ist. Zur Lagerung dienen zwei Kugellager 70, die um die beiden Wuchtringe 100, 100' herum auf der Welle 20 angeordnet sind. Die Drehung des Rotors erfolgt um die Rotationsachse 80 der Welle 20 und kann im Weiteren von der Welle 20 entweder über ein Kupplungssystem oder über ein Zahnrad auf eine weitere Welle übertragen werden. Die Wuchtringe 100, 100' dienen zum Unwuchtausgleich des Rotors in zwei Ebenen.

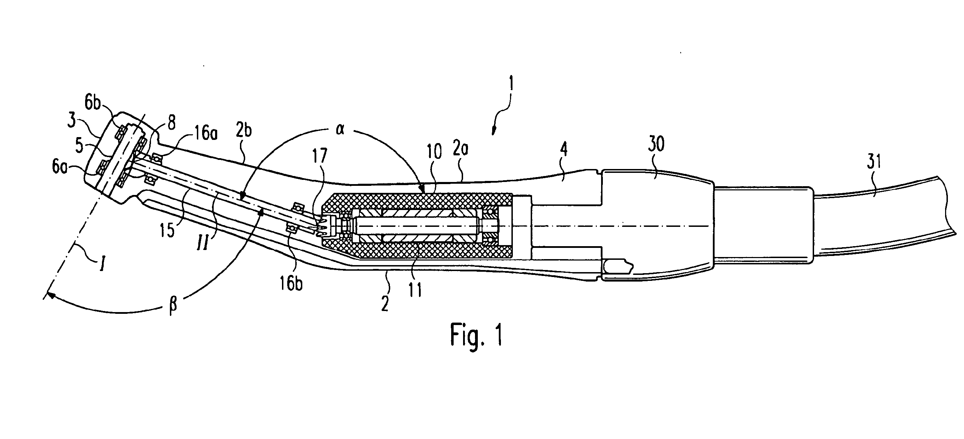

Beispielsweise werden derartige kollektorlose Elektromotoren für den Antrieb von Dentalgeräten, beispielsweise zahnärztlichen Handstücken, beispielsweise in Form von dentalen Motorwinkelstücken, eingesetzt. Ein derartiges zahnärztliches Handstück 1 mit einem entsprechenden Elektromotor 10 ist in Fig. 1 skizziert.

Je höher die maximale Drehzahl des Rotors ist, desto bedeutender sind die Wuchtgüte des Rotors und die Koaxialität bzw. der Radialschlag der Bauteile. Eine Unwucht führt zu einer erhöhten Belastung der Kugellager 70 und zu einer stärkeren Geräuschentwicklung.

Aus dem Stand der Technik ist in diesem Zusammenhang bekannt, die Passungen zwischen den Wuchtringen 100, 100' und der Welle 20 als Presspassungen bzw. Pressverbund 22 auszulegen, um zu erzielen, dass die Rotationsachsen der genannten Bauteile möglichst gut fluchten bzw. möglichst wenig voneinander abweichen.

Eine entsprechende Presspassung zwischen dem Magnet 40 des Rotors und der Welle 20 ist jedoch nicht üblich, und zwar insbesondere aus den beiden folgenden Gründen: Erstens sind die Materialien, aus denen entsprechende Magnete gefertigt sind, in gewissem Ausmaß spröde und neigen ab einer gewissen Zugbeanspruchung zum Reißen. In gewissem Ausmaß würde eine Zugbeanspruchung bereits beim Aufpressen des Magneten entstehen. Außerdem entstehen bei Rotation Fliehkräfte, die ebenfalls eine Zugbeanspruchung des Magneten zur Folge haben. Insgesamt betrachtet wäre daher die Belastung des Magneten in diesem Sinne zu groß. Zweitens unterscheidet sich üblicherweise der Wärmeausdchnungskoeffizient des Materials, aus dem die Welle besteht - beispielsweise Stahl - signifikant von demjenigen des Materials, aus dem der Magnet besteht. In der Regel dehnt sich der Magnet bei Wärme weniger aus, als die Welle. Aus diesem Grund würde im Fall einer Presspassung des Magneten auf der Welle die Gefahr bestehen, dass der Pressverbund derart verstärkt wird, dass bei Erwärmung der Magnet 40 platzt bzw. berstet.

Aufgrund der geschilderten Zusammenhänge ist es nach dem Stand der Technik üblich, den Magnet 40 auf der Welle 20 aufzukleben, so dass also ein Klebeverbund 24 gebildet ist. Der Klebeverbund 24 bedingt einen Klebespalt, in dem Klebstoff angeordnet ist. Durch den Klebeverbund 24 kann eine zu große Zugspannung vermieden werden und die in dem Klebespalt befindliche Klebstoffschicht des Klebeverbunds 24 kann bei Erwärmung das unterschiedliche Ausdehnungsverhalten von der Welle 20 einerseits und von dem Magnet 40 andererseits kompensieren.

Allerdings ist es bei dieser Technik nunmehr problematisch, den Magnet 40 genau zentrisch auf der Welle 20 aufzukleben, insbesondere derart zentrisch, dass die Symmetrieachse des Magneten 40 zur Rotationsachse 80 der Welle 20 weder einen Querversatz aufweist, noch zu dieser diagonal liegt. Um einen potenziellen, hierdurch verursachten Fehler möglichst klein zu halten, ist es daher dabei weiterhin üblich, den Klebespalt, der zwischen den Magneten 40 und der Welle 20 für die Klebung vorgesehen ist, möglichst klein zu bemessen. Dies hat wiederum enge Fertigungstoleranzen für den Magnet 40 und die Welle 20 zur Folge und führt außerdem dazu, dass nur besonders dünnflüssige Klebstoffe verwendet werden können.

Es muss also damit gerechnet werden, dass der Klebespalt des Klebeverbunds 24 mit Bezug auf die Rotationsachse 80 der Welle 20 mehr oder weniger unsymmetrisch geformt ist. Die hierdurch entstehenden Rundlauf-Fehler bzw. die dadurch resultierende Unwucht erfordern dann ein nachträgliches Wuchten. Bisweilen wird der Magnet 40 nach dem Verkleben und vor dem Wuchten auf der Welle auch noch überschliffen. Dies bewirkt zwar, dass der Magnet 40 außen nahezu schlagfrei zur Welle 20 läuft, aber Unsymmetrien des Klebespaltes können hierdurch nicht eliminiert werden. Die Güte der Koaxialität des Magneten 40 und der Welle 20 hängt erheblich von der Stärke des Klebespalts ab. Je größer der Spalt, umso größer kann der Versatz sein und desto größer die "innere" Unwucht.

Da mit steigernder Drehzahl die Wuchtgüte eine zunehmende Rolle für die Rotorqualität spielt, kann bei sehr hohen Drehzahlen auch eine derartige "innere" bzw. achsnahe Unwucht sehr störend sein.

Aus dem Stand der Technik sind ferner Armierungen für Magnete von Rotoren bekannt, die Teil eines Wuchtrings sind oder die die Magnete hülsenartig umgeben. Derartige Armierungen dienen dem Schutz der Magnete, beispielsweise vor Korrosion oder vor einem Bersten, wirken sich jedoch nicht auf die oben genannte Problematik aus. Die genannten Armierungen werden auf die Magnete aufgeklebt.

Aus der DE 36 22 231 A1 ist ein Permanentmagnetrotor für elektrische Maschinen bekannt, bei dem auf einer Rotorwelle Abschlussringe und eine Hülse aufgepresst sind. Innerhalb der Hülse sind Permanentmagnetsegmente angeordnet.

Aus der US 5,053,664 ist ein Elektromotor mit einem Rotor bekannt, bei dem auf der Rotorwelle zwischen einer Rotorabdeckung und einem Taktrotor Rotormagnete angeklebt sind.

Aus der DE 43 31 803 A1 ist ein Elektromotor mit einem Rotor bekannt, bei dem Magnete über Halteklammern an der Rotorwelle gehalten sind.

Aus der DE 103 14 394 A1 ist ein Rotor bekannt, bei dem ein Ringmagnet in eine Hülse eingepresst ist und die Hülse auf der Rotorwelle aufgepresst ist. Die Hülse dient der Zentrierung des Ringmagneten gegenüber der Welle.

Der Erfindung liegt die Aufgabe zu Grunde, einen Rotor anzugeben, der eine besonders präzise und dabei einfache Zentrierung der Magnete ermöglicht. Eine entsprechende Aufgabe stellt sich für einen Elektromotor mit einem derartigen Rotor bzw. für ein entsprechendes zahnärztliches Handstück mit einem derartigen Elektromotor.

Diese Aufgabe wird mit den Gegenständen der unabhängigen Ansprüche gelöst. Bevorzugte Ausführungsformen sind in den abhängigen Ansprüchen angegeben.

Gemäß der Erfindung ist ein Rotor für einen Elektromotor vorgesehen, wobei der Rotor eine Welle mit einer Rotationsachse aufweist, sowie wenigstens einen Magnet, der um die Rotationsachse herum angeordnet ist. Weiterhin weist der Rotor ein Zentrierelement auf, das fest mit der Welle verbunden ist oder als Teil der Welle ausgebildet ist, wobei das Zentrierelement mit Bezug auf die Rotationsachse der Welle zentrierend von außen auf den Magnet drückt.

Dadurch, dass das Zentrierelement von außen zentrierend auf den Magnet drückt, kann sich eine Ungenauigkeit bei der Ausrichtung des Magneten bezüglich der Rotationsachse aufgrund eines Klebespaltes zwischen der Welle und dem Magnet - im Gegensatz zum Stand der Technik - nicht mehr ergeben. Eine exakte Zentrierung lässt sich somit einfacher realisieren. Außerdem wirkt der Druck des Zentrierelements, der von außen auf den Magnet wirkt, Fliehkräften entgegen, die bei Rotation auf den Magnet einwirken. Auf diese Weise lassen sich höhere Drehzahlen erzielen, ohne dass die Oberfläche des Magneten eine kritische Zugspannung überschreitet. Außerdem lässt sich bei dem erfindungsgemäßen Rotor ein Klebespalt zwischen der Welle und dem Magnet größer als beim Stand der Technik gestalten, was zur Folge hat, dass - im Vergleich zur Technik - auch dickflüssigere Klebstoffe genutzt werden können. Dies ist vorteilhaft, weil derartige Klebstoffe höhere Klebekräfte aufweisen können und besser verarbeitbar sein können. Weiterhin ist durch das Zentrierelement eine Sicherung des Magneten bei möglichem Verlust der Klebekraft zwischen der Welle und dem Magnet gegeben. Die Druckkraft des Zentrierelements auf den Magnet kann leicht so gewählt werden, dass diese dazu ausreicht, das auf den Magnet wirkende Drehmoment über das Zentrierelement auf die Welle des Rotors zu übertragen.

Vorteilhaft ist bei dem Rotor der Magnet am Außenumfang der Welle angeordnet.

Das Zentrierelement und der Magnet sind zumindest teilweise über eine Presspassung oder eine Schrumpfpassung miteinander verbunden.

Das Zentrierelement weist einen hülsenartigen Bereich auf, der den Magnet zumindest teilweise von außen umfasst. Der hülsenartige Bereich kann eine kreiszylindrische Innenwand aufweisen, deren Durchmesser im Sinne einer Pressverbindung oder Schrumpfverbindung an eine äußere Begrenzungsfläche des Magneten, beispielsweise eine äußere Mantelfläche des Magneten, angepasst ist.

Der Rotor weist weiterhin wenigstens einen Wuchtring auf, der auf der Welle angeordnet ist, wobei das Zentrierelement fest mit dem Wuchtring verbunden ist.

Das Zentrierelement und der Wuchtring sind dabei in einem Stück gefertigt.

Vorteilhaft ist der Wuchtring dabei entweder auf der Welle aufgepresst oder auf der Welle aufgeschrumpft.

Vorteilhaft umfasst das Zentrierelement den Magnet über die gesamte Erstreckung des Magneten längs der Welle. Es kann aber auch vorgesehen sein, dass das Zentrierelement den Magnet nur über einen Teil der gesamten Erstreckung des Magneten längs der Welle umfasst.

Vorteilhaft ist zwischen der Welle und dem Magnet ein Klebeverbund vorgesehen.

Gemäß einem weiteren Aspekt der Erfindung ist ein Elektromotor vorgesehen, der einen erfindungsgemäßen Rotor aufweist.

Gemäß einem noch weiteren Aspekt der Erfindung ist ein zahnärztliches Handstück vorgesehen, das einen erfindungsgemäßen Elektromotor aufweist.

Die Erfindung wird im Folgenden anhand eines Ausführungsbeispiels und mit Bezug auf die Zeichnungen näher erläutert. Es zeigen:
- Fig. 1: eine Darstellung eines zahnärztlichen Handstücks, bei dem der Einsatz eines erfindungsgemäßen Elektromotors vorgesehen ist,
- Fig. 2: eine Schnittdarstellung eines erfindungsgemäßen Rotors gemäß einer ersten Variante,
- Fig. 3: eine Schnittdarstellung eines Rotors gemäß einer zweiten Variante, nicht Teil der beanspruchten Erfindung.
- Fig. 4: eine Schnittdarstellung eines erfindungsgemäßen Rotors gemäß einer dritten Variante, und
- Fig. 5: eine Schnittdarstellung eines Rotors gemäß dem Stand der Technik.

Das in Fig. 1 schematisch dargestellte und allgemein mit dem Bezugszeichen 1 versehene Handstück, bei dem der erfindungsgemäße Elektromotor zum Einsatz kommt, weist eine längliche Griffhülse 2 auf, die in einen hinteren Bereich 2a, sowie einen vorderen Bereich 2b unterteilt ist, wobei beide Bereiche 2a, 2b einen Winkel a von etwa 155° bis 170° miteinander einschließen. Die Handhabung des Handstücks 1 innerhalb des Mundraums eines Patienten wird durch diese abgewinkelte Ausgestaltung vereinfacht. An dieser Stelle soll allerdings angemerkt werden, dass die Verwendung des nachfolgend noch näher beschriebenen erfindungsgemäßen Elektromotors nicht auf derartige so genannte Winkelhandstücke beschränkt ist. Stattdessen kann der Motor allgemein bei zahnärztlichen, zahnmedizinischen oder dentaltechnischen Handstücken zum Einsatz kommen.

Am vorderen Ende der Griffhülse 2 befindet sich der Kopfbereich 3 des Handstücks 1, der eine mittels zweier Lager 6a, 6b drehbar gelagerte Werkzeugaufnahme 5 aufweist. Diese Werkzeugaufnahme 5 ist insbesondere zur Aufnahme von zahnärztlichen Bohrern vorgesehen. Aus ergonomischen Gründen kann ferner vorgesehen sein, dass der Koptbereich 3 derart ausgeführt ist, dass die Längsachse der Werkaufnahme 5 mit der Achse II des vorderen Endbereichs 2b der Griffhülse 2 einen Winkel β von etwa 100° einschließt. Die Werkzeugaufnahme 5 wird dabei mit Hilfe des nachfolgend noch näher beschriebenen Motors 10 in Rotation versetzt, wobei die Drehung des Motors 10 über eine Antriebswelle 15, die sich durch den vorderen Griflhülsenbereich 2b erstreckt, weitergeleitet wird. Die Antriebswelle 15 ist hierbei mittels zweier Lager 16a, 16b drehbar gelagert und an ihrem rückseitigen Ende über ein Getriebe 17 mit dem Rotor 11 des Motors 10 sowie an ihrem vorderen Ende über ein weiteres Getriebe 8 mit der Werkzeugaufnahme 5 gekoppelt.

Am rückseitigen Ende der Griffhülse 2 ist diese mit einem Anschlussteil 30 eines Versorgungsschlauchs 31 verbunden. Dieser Schlauch 31 führt zu einer (nicht dargestellten) Versorgungseinrichtung eines zahnärztlichen Behandlungsplatzes und dient dazu, dem Handstück 1 die zum Betrieb erforderlichen Medien zur Verfügung zu stellen. Es handelt sich hierbei insbesondere um Strom, der zum Betrieb des Motors 10 verwendet wird. Auch zusätzliche Behandlungsmedien, wie Luft und/oder Wasser können über den Schlauch 31 zu dem Handstück 1 geleitet werden. Der Anschluss des Handstücks 1 erfolgt dann über ein im rückwärtigen Ende befindliches Kupplungselement 4, über welches eine Verbindung mit dem Schlauchanschluss 30 erfolgt.

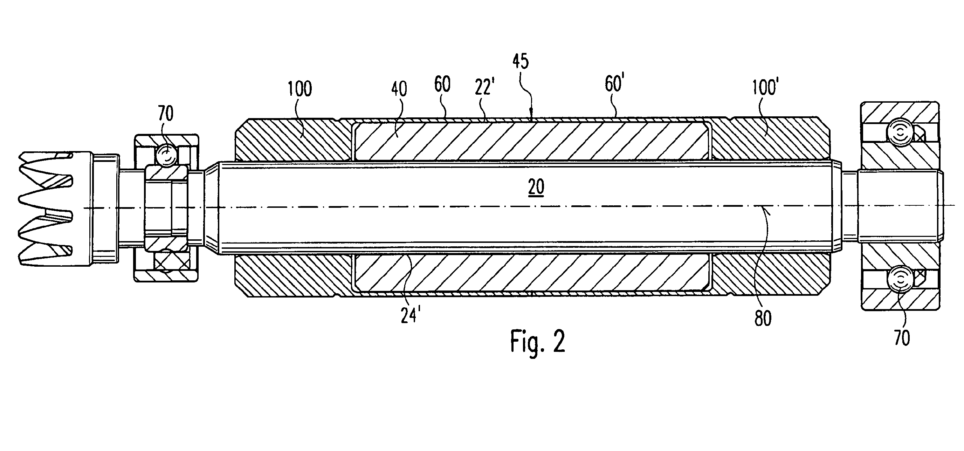

Fig. 2 zeigt einen Querschnitt durch einen erfindungsgemäßen Rotor gemäß einem ersten Ausführungsbeispiel. Der Rotor umfasst eine Welle 20 mit einer Rotationsachse 80, und wenigstens einen Magnet 40, der um die Rotationsachse 80 herum angeordnet ist. Der Magnet 40 weist dabei wenigstens ein nach außen wirksames Polpaar auf.

Der Magnet 40 weist eine zylindrische Außenfläche, im Folgenden auch Mantelfläche genannt, auf, sowie eine zylindrische, zu der Außenfläche symmetrische, innere zylindrische Öffnung, deren Durchmesser mit dem äußeren Durchmesser der Welle 20 korrespondiert, so dass der Magnet 40 auf der Welle 20 angeordnet werden kann. Der Magnet 40 ist bei diesem Ausführungsbeispiel also am Außenumfang der Welle 20 angeordnet. Je präziser dabei die Koaxialität der Mantelfläche mit der inneren Öffnung des Magneten 40 ist, desto besser kann die vorliegende Erfindung wirken, wie aus den nachfolgend beschriebenen Zusammenhängen klar wird.

Der Rotor ist in an sich bekannter Weise über zwei Lager, beispielsweise zwei Kugellager 70 in einem Elektromotor angeordnet. Der Elektromotor kann beispielsweise in einem zahnärztlichen Handstück zum Antrieb eines zahnärztlichen Werkzeugs vorgesehen sein, so wie in Fig. 1 an sich durch den Elektromotor 10 skizziert.

Der Rotor weist, wie in Fig. 2 dargestellt, weiterhin ein Zentrierelement 60 auf, das fest mit der Welle 20 verbunden ist oder alternativ als Teil der Welle 20 ausgebildet sein kann. Das Zentrierelement 60 drückt mit Bezug auf die Rotationsachse 80 der Welle 20 zentrierend von außen auf den Magnet 40.

Das Zentrierelement 60 und der Magnet 40 sind gemäß dem Ausführungsbeispiel über eine Presspassung bzw. einen Pressverbund 22' miteinander verbunden. Es kann auch eine Verbindung über eine Schrumpfpassung vorgesehen sein. Der Pressverbund 22' ist dabei an einer Oberfläche des Magneten 40 vorgesehen, die - mit Bezug auf die Rotationsachse 80 - eine nach außen gerichtete Oberfläche ist. Auf diese Weise kann das Zentrierelement 60 von außen auf den Magnet 40 wirken bzw. drücken.

Das Zentrierelement 60 umfasst einen hülsenartigen Bereich, mit einem inneren kreiszylindrischen Freiraum, dessen Durchmesser im Sinne der Presspassung an den Außendurchmesser des Magneten 40, also an den Durchmesser der Mantelfläche des Magneten 40 angepasst ist. Das Zentrierelement 60 bzw. der hülsenartige Bereich umfasst also den Magnet 40 von außen ringförmig. Das Zentrierelement 60 ist dabei mit Bezug auf die Rotationsachse 80 der Welle 20 derart angeordnet, dass der zylindrische Freiraum symmetrisch zur Rotationsachse 80 ausgerichtet ist.

Der Rotor umfasst weiterhin einen Wuchtring 100, der unmittelbar neben dem Magnet 40 auf der Welle 20 angeordnet ist. Beim ersten, in Fig. 2 gezeigten Ausführungsbeispiel ist dabei das Zentrierelement 60 fest mit dem Wuchtring 100 verbunden, und zwar aus einem Stück mit dem Wuchtring 100 gefertigt. Das Zentrierelement 60 ist also sozusagen als topfartiger Fortsatz des Wuchtrings 100 ausgebildet.

Der hülsenartige Bereich des Zentrierelements 60 ist dabei derart an dem Wuchtring 100 angeordnet, dass bei montiertem Wuchtring 100 der innere zylindrische Freiraum symmetrisch zur Rotationsachse 80 orientiert ist.

Der Wuchtring 100 ist wiederum auf der Welle 20 aufgepresst oder aufgeschrumpft. Auf diese Weise ist beim ersten Ausführungsbeispiel die feste Verbindung zwischen dem Zentrierelement 60 und der Welle 20 realisiert. Die Verbindung zwischen dem Zentrierelement 60 und der Welle 20 ist dabei derart fest, dass das Zentrierelement 60 eine Stütze für den Magnet 40 bilden kann, die den Magnet 40 bei einer vorgesehenen Rotation des Rotors mit einer gewünschten Genauigkeit bezüglich der Rotationsachse 80 bzw. bezüglich der Welle 20 lagefixiert.

Kurz gefasst ist also die Passung zwischen der äußeren Begrenzungsfläche des Magneten 40 und der inneren Begrenzung des hülsenartigen Bereichs des Zentrierelements 60 als Presspassung ausgelegt. So wird erreicht, dass sich der Magnet 40 an dem Wuchtring 100 ausrichten muss. Da der Wuchtring 100 ebenfalls über eine Presspassung auf der Welle 20 befestigt ist, ist eine Zentrierung des Magneten 40 mit Bezug auf die Rotationsachse 80 der Welle 20 besonders einfach und dabei genau möglich. Alternativ oder ergänzend zu den Presspassungen sind dabei entsprechende Verbindungen durch Aufschrumpfen, also Schrumpfpassungen möglich.

Allgemein formuliert ist das Zentrierelement also fest mit der Welle verbunden, wobei diese Verbindung nicht zwangsläufig über einen Wuchtring realisiert sein muss. Es kann beispielsweise auch vorgesehen sein, dass das Zentrierelement an sich topfartig mit einer zentralen Öffnung im Bodenbereich ausgebildet ist, wobei die Öffnung unmittelbar als Verbindungsbereich zu der Welle vorgesehen ist. Das Zentrierelement kann also in diesem Fall unmittelbar auf der Welle aufgepresst oder aufgeschrumpft sein. In diesem Fall kann beispielsweise vorgesehen sein, dass das Zentrierelement auf der Welle unmittelbar neben dem Magnet angeordnet ist. Ein Wuchtring kann dann auf der anderen Seite des Zentrierelements vorgesehen sein.

Beim gezeigten ersten Ausführungsbeispiel sind zwei Wuchtringe 100, 100' vorgesehen, die zu beiden Seiten des Magneten 40 auf der Welle 20 angeordnet sind. Der zweite Wuchtring 100' ist symmetrisch zu dem ersten Wuchtring 100 ausgebildet, so dass also ein zweites Zentrierelement 60' vorgesehen ist und dabei jeder der beiden Wuchtringe 100, 100' fest mit jeweils einem Zentrierelement 60, 60' verbunden ist. Durch zwei derartige Zentrierelemente 60, 60' kann die Genauigkeit der Zentrierung des Magneten 40 mit Bezug auf die Rotationsachse 80 weiter erhöht werden.

Beim ersten Ausführungsbeispiel sind die Zentrierelemente 60, 60' derart ausgebildet, dass sie im zusammengebauten Zustand den Magnet 40 vollständig umgreifen, also mit ihren, den Magnet 40 übergreifenden Stirnseiten 45 der hülsenartigen Bereiche aneinanderstoßen bzw. direkt aneinander grenzen. Der Magnet 40 wird in diesem Fall also vollständig umfasst, so dass durch die Zentrierelemente 60, 60' zusätzlich zu der Zentrierfunktion auch eine Sicherungsfunktion, beispielsweise gegen ein Ausbrechen bzw. Bersten des Magneten 40, erfüllt werden kann.

Zwischen der Welle 20 und dem Magnet 40 ist beim ersten Ausführungsbeispiel ein Klebeverbund 24' vorgesehen.

Da der Inendurchmesser des Magneten 40 symmetrisch zur äußeren Begrenzungsfläche des Magneten 40, also zur Mantelfläche geformt ist und auch die äußere Begrenzungsfläche der Welle 20 symmetrisch zur Rotationsachse 80 ausgebildet ist, ergibt stich, dass der für den Klebstoff des Klebeverbunds 24' erforderliche Spalt zwischen dem Magnet 40 und der Welle 20 durch die erfindungsgemäße Anordnung zwangsläufig an allen Stellen gleichmäßig stark und symmetrisch zur Rotationsachse 80 ist.

Es kann also insbesondere kein Achsversatz zwischen dem Magnet 40 und der Welle 20 entstehen und somit auch keine dementsprechende Unwucht.

Vorteilhaft ist die erfindungsgemäße Anordnung außerdem mit Bezug auf die absolute Breite des Klebespalts des Klebeverbunds 24' zwischen dem Magnet 40 und der Welle 20. Da im Vergleich zum oben beschriebenen Stand der Technik nunmehr die Zentrierung des Magneten 40 nicht mehr über einen möglichst kleinen Spalt realisiert werden muss, kann ein breiterer Spalt gewählt werden, was im Weiteren zur Folge hat, dass auch Klebstoffe genutzt werden können, die im Vergleich zum Stand der Technik dickflüssiger sind, also im Allgemeinen auch Klebstoffe, die mehr Klebekraft aufweisen können und/oder die sich besser verarbeiten lassen.

Vorteilhaft wirkt sich außerdem die Druckspannung aus, die von den beiden Zentrierelementen 60, 60' auf den Magnet 40 ausgeübt wird. Eine kritische Drehzahl, bei der der Magnet 40 aufgrund von Fliehkräften mechanisch versagt, wird durch die mit den Zentrierelementen induzierten Druckspannungen heraufgesetzt. Die durch Fliehkräfte entstehenden Zugspannungen können durch die Zentrierelemente also reduziert werden. Die Sicherheit gegen ein Platzen bzw. Bersten des Magneten 40 bei einer bestimmten Betriebsdrehzahl kann auf diese Weise erhöht werden. Hierdurch können beispielsweise Schwankungen mechanischer Werkstoffparameter des Magneten 40 besser "abgefangen" werden.

Auf diese Weise können also besonders hohe Drehzahlen ermöglicht werden, ohne dass die Oberfläche des Magneten 40 eine kritische Zugspannung überschreitet. Auch in dieser Hinsicht ist es daher günstig, wenn die Zentrierelemente 60, 60' den Magnet 40 vollständig - also über die gesamte Erstreckung des Magneten 40 längs der Rotationsachse 80 - umfassen, so wie beim ersten Ausführungsbeispiel vorgesehen.

Zusätzlich wird durch die Erfindung eine Sicherungsfunktion gegen Verlust der Klebekraft zwischen der Welle 20 und dem Magnet 40 geboten, denn die durch den Pressverbund 22' wirkende Presskraft zwischen den Zentrierelementen 60, 60' und dem Magnet 40 reicht aus, um ein Drehmoment wirksam von dem Magnet 40 auf die Welle 20 zu übertragen. Die Erfindung funktioniert also insbesondere auch in dem Fall, dass zwischen der inneren Öffnung des Magneten 40 und dem in dieser Öffnung befindlichen Bereich der Außenfläche der Welle 20 keine direkte mechanische Verbindung vorgesehen ist.

Das Zentrierelement 60 kann so gestaltet sein, dass es eine Armierungsfunktion erfüllt, also einen Schutz vor einem Ausbrechen des Magneten 40 bietet. Dies kann durch entsprechende Auswahl eines geeigneten Materials für das Zentrierelement, sowie geeignete Wahl der Stärke bzw. Formgebung erzielt werden.

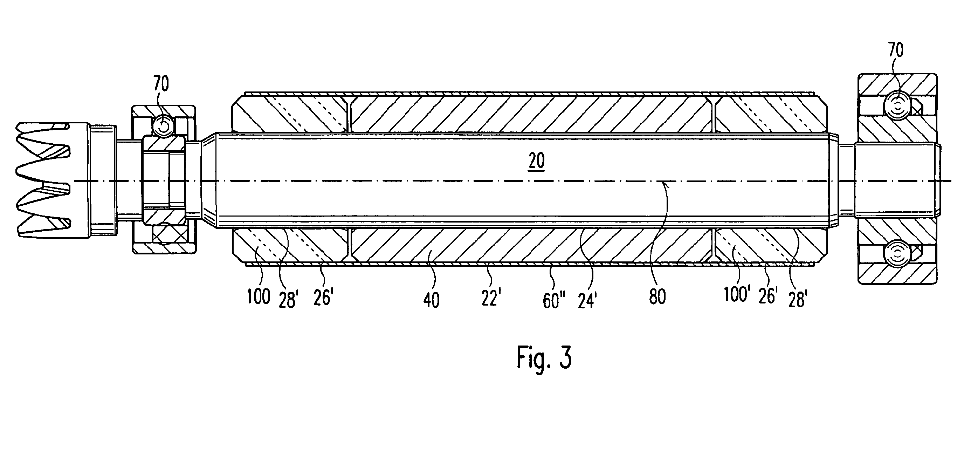

In Fig. 3 ist ein Beispiel, nicht Teil der beanspruchten Erfindung, gezeigt. Im Folgenden wird lediglich auf die Unterschiede zum ersten Ausführungsbeispiel eingegangen.

Beim diesem Beispiel ist ein Zentrierelement 60" vorgesehen, das hülsenförmig ist und das den Magnet 40 über seine gesamte Längserstreckung längs der Rotationsachse 80 überragt. Zwischen dem Zentrierelement 60" und dem Magnet 40 ist wiederum ein Pressverbund 22' oder Schrumpfverbund vorgesehen.

In den Bereichen, in denen das Zentrierelement 60" den Magnet 40 beiderseits überragt, ist das Zentrierelement 60" jeweils mit einem der beiden Wuchtringe 100, 100' fest verbunden, und zwar wiederum über einen Pressverbund 26'. Alternativ kann das Zentrierelement 60" auf den beiden Wuchtringen 100, 100' aufgeschrumpft sein.

Die beiden Wuchtringe 100, 100' sind jeweils über einen Pressverbund 28' mit der Welle 20 fest verbunden. Alternativ können die Wuchtringe 100, 100' auf der Welle 20 aufgeschrumpft sein.

Im Unterschied zum ersten Ausführungsbeispiel ist hier also nur ein Zentrierelement 60" vorgesehen, wobei dieses Zentrierelement 60" den Magnet 40 überragt. Das Zentrierelement 60" bildet sozusagen eine Zentrierhülse, die die beiden Wuchtringe 100, 100' überspannt. Der Magnet 40 ist dabei in die Zentrierhülse eingepresst.

Da das Zentrierelement 60" über die Wuchtringe 100, 100' fest mit der Welle 20 verbunden ist, kann wiederum die vorteilhafte zentrierende Wirkung auf den Magnet 40 erzielt werden.

Die durchgängige Ausführung des Zentrierelements 60" ermöglicht darüber hinaus eine besonders gute zusätzliche Sicherungsfunktion, weil - mit Bezug auf die Längserstreckung der Rotationsachse 80 - kein Spalt auf Höhe des Magneten 40 gebildet ist.

Zwischen dem Magnet 40 und der Welle 20 kann wiederum ein Klebeverbund 24' vorgesehen sein.

Zur Herstellung des Rotors kann in diesem Fall vorgesehen sein, dass zunächst der Magnet 40 in dem Zentrierelement 60" bzw. in der Zentrierhülse eingepresst wird, in einem folgenden Schritt das so gebildete Bauteil dann unter Einbringung von Klebstoff auf die Welle 20 geschoben wird und in einem weiteren folgenden Schritt dann die beiden Wuchtringe 100, 100' eingepresst werden, die sowohl zur Zentrierhülse, als auch zur Welle 20 eine Press- oder Schrumpfpassung aufweisen. Bei dem zuletzt genannten Schritt wird das Zentrierelement 60" gegenüber der Welle 20 zentriert und somit auch der Magnet 40 gegenüber der Welle 20. In diesem Fall ist es vorteilhaft, wenn ein Klebstoff gewählt wird, der eine entsprechend lange Aushärtezeit aufweist.

Wie beim ersten Ausführungsbeispiel muss auch hier die Verbindung zwischen dem Zentrierelement 60" und der Welle 20 nicht zwangsläufig über einen Wuchtring 100 bzw. über die Wuchtringe 100, 100' erfolgen. Anstelle der Wuchtringe 100, 100' können dementsprechend symmetrisch geformte ringförmige Bauteile vorgesehen sein.

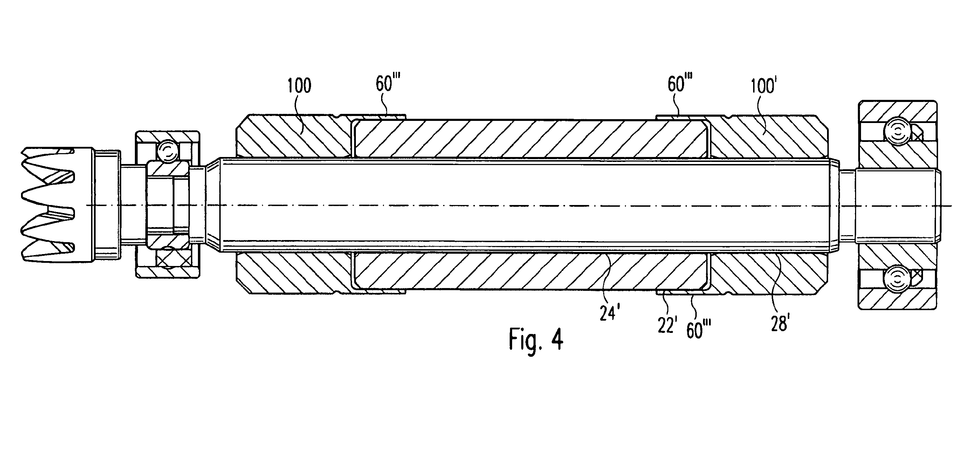

In Fig. 4 ist ein drittes Ausführungsbeispiel gezeigt. Wie beim ersten Ausführungsbeispiel sind hier wiederum zwei Zentrierelemente 60'" vorgesehen, die jeweils fest mit einem Wuchtring verbunden sind, also beispielsweise - wie in Fig. 4 gezeigt - jeweils mit dem jeweiligen Wuchtring 100, 100' aus einem Stück gefertigt sind.

Im Unterschied zum ersten Ausführungsbeispiel erstrecken sich im montierten Zustand die beiden Zentrierelemente 60'" jedoch nicht über die gesamte Längserstreckung des Magneten 40 längs der Rotationsachse 80, sondern umfassen den Magnet 40 lediglich in ihren jeweiligen Randabschnitten. Die Zentrierfunktion der Zentrierelemente 60"' ist aufgrund der symmetrischen Verhältnisse auch hier erfüllt. Der vorteilhafte Effekt der von außen auf den Magnet 40 wirkenden Druckspannung ist zwar im Gegensatz zum ersten Ausführungsbeispiel weniger großflächig, wirkt aber in den beiden Randbereichen des Magneten 40 und gerade dort befinden sich die Kanten, die besonders empfindlich sind und bevorzugt zum Ausbrechen neigen.

Da mit der Erfindung das Rundlaufverhalten eines Elektromotors vorteilhaft beeinflusst werden kann, und dieser Effekt mit zunehmender Drehzahl an Bedeutung gewinnt, eignet sich die Ereindung besonders für hochdrehende Motoren, beispielsweise für hochdrehende Dentalmotoren. Beispielsweise kann als Drehzahlbereich eines derartigen Motors 30'000 bis 200 000 U/min angegeben werden, wobei auch Umdrehungszahlen oberhalb von 200 000 U/min vorgesehen sein können.

### Bezugsteichenliste

- 1: Handstück
- 2: Grifthülse
- 2a: hinterer Bereich der Griffhülse
- 2b: vorderer Bereich der Griffhülse
- 3: Koptbereich dies Handstücks
- 4: Kupplungselement
- 5: Werkzeugaufnahme
- 6a, 6b: Lager der Werkzeugaufnahme
- 8: weiteres Getriebe
- 10: Elektromotor
- 11: Rotor
- 15: Antriebswelle
- 16a, 16b: Lager der Antriebswelle
- 17: Getriebe
- 20: Welle des Rotors
- 22: Pressverbund zwischen Wuchtring und Welle (Stand der Technik)
- 22': Pressverbund zwischen Zentrierelement und Magnet
- 24, 24': Klebeverbund
- 26': Pressverbund zwischen Zentrierelement und Wuchtring
- 28': Pressverbund zwischen Wuchtring und Welle
- 30: Anschlussteil
- 31: Versorgungsschlauch
- 40: Magnet
- 45: Stirnfläche des Zentrierelements
- 60, 60': Zentrierelement (erstes Ausführungsbeispiel)
- 60": Zentrierelement (zweites Ausführungsbeispiel)
- 60"': Zentrierelement (drittes Ausführungsbeispiel)
- 70: Kugellager
- 80: Rotationsachse der Welle des Rotors
- 100, 100': Wuchtringe

## Patentansprüche

1. Rotor für einen Elektromotor,
wobei der Rotor aufweist:
- eine Welle (20) mit einer Rotationsachse (80), und
- wenigstens einen Magnet (40), der um die Rotationsachse (80) herum angeordnet ist,
- ein Zentrierelement (60, 60', 60", 60"'), das fest mit der Welle (20) verbunden ist oder als Teil der Welle (20) ausgebildet ist,
wobei das Zentrierelement (60, 60', 60", 60"') mit Bezug auf die Rotationsachse (80) der Welle (20) zentrierend von außen auf den Magnet (40) drückt und
wobei das Zentrierelement (60, 60', 60", 60"') und der Magnet (40) zumindest teilweise über eine Presspassung oder eine Schrumpfpassung miteinander verbunden sind,
wobei das Zentrierelement (60, 60', 60", 60"') einen hülsenartigen Bereich aufweist, der den Magnet (40) zumindest teilweise von außen umfasst,
**gekennzeichnet durch**
- wenigstens einen Wuchtring (100, 100'), der auf der Welle (20) angeordnet ist, wobei das Zentrierelement (60, 60', 60", 60"') fest mit dem Wuchtring (100, 100') verbunden ist und
wobei das Zentrierelement (60, 60', 60", 60''') und der Wuchtring (100, 100') in einem Stück gefertigt sind.

2. Rotor nach Anspruch 1,
bei dem der Magnet (40) am Außenumfang der Welle (20) angeordnet ist.

3. Rotor nach Anspruch 1 oder 2,
bei dem der Wuchtring (100, 100') entweder auf der Welle (20) aufgepresst ist oder auf der Welle (20) aufgeschrumpft ist.

4. Rotor nach einem der vorhergehenden Ansprüche,
bei dem das Zentrierelement (60, 60', 60", 60'") den Magnet (40) über die gesamte Erstreckung des Magneten (40) längs der Welle (20) umfasst.

5. Rotor nach einem der Ansprüche 1 bis 3,
bei dem das Zentrierelement (60, 60', 60", 60"') den Magnet (40) nur über einen Teil der gesamten Erstreckung des Magneten (40) längs der Welle (20) umfasst.

6. Rotor nach einem der vorhergehenden Ansprüche,
bei dem zwischen der Welle (20) und dem Magnet (40) ein Klebeverbund vorgesehen ist.

7. Elektromotor,
aufweisend einen Rotor nach einem der vorhergehenden Ansprüche.

8. Zahnärztliches Handstück,
aufweisend einen Elektromotor nach Anspruch 7.

## Claims

1. A rotor for an electric motor,
wherein the rotor has:
- a shaft (20) with a rotational axis (80), and
- at least one magnet (40) arranged around the rotational axis (80),
- a centring element (60, 60', 60", 60"') which is rigidly connected to the shaft (20) or is constructed as part of the shaft (20),
wherein the centring element (60, 60', 60", 60"') presses on the magnet (40) from outside to centre it in relation to the rotational axis (80) of the shaft (20), and
wherein the centring element (60, 60', 60", 60"') and the magnet (40) are at least partially connected to one another via a press fit or a shrink fit,
wherein the centring element (60, 60', 60", 60"') has a sleeve-like region which at least partially encompasses the magnet (40) from outside,
**characterised by**
- at least one balancing ring (100, 100'), arranged on the shaft (20),
wherein the centring element (60, 60', 60", 60"') is rigidly connected to the balancing ring (100, 100'), and wherein the centring element (60, 60', 60", 60"') and the balancing ring (100, 100') are made in one piece.

2. A rotor according to claim 1,
in which the magnet (40) is arranged on the external circumference of the shaft (20).

3. A rotor according to claim 1 or 2,
in which the balancing ring (100, 100') is either pressed on the shaft (20) or shrunk on the shaft (20).

4. A rotor according to one of the preceding claims,
in which the centring element (60, 60', 60", 60"') encompasses the magnet (40) over the entire extent of the magnet (40) along the shaft (20).

5. A rotor according to one of claims 1 to 3,
in which the centring element (60, 60', 60", 60"') encompasses the magnet (40) over only part of the entire extent of the magnet (40) along the shaft (20).

6. A rotor according to one of the preceding claims,
in which an adhesive bond is provided between the shaft (20) and the magnet (40).

7. An electric motor
having a rotor according to one of the preceding claims.

8. A dental handpiece
having an electric motor according to claim 7.

## Revendications

1. Rotor pour moteur électrique,
ledit rotor comprenant :
- un arbre (20) avec un axe de rotation (80), et
- au moins un aimant (40) disposé autour de l'axe de rotation (80),
- un élément de centrage (60, 60',60", 60"') solidaire de l'arbre (20) ou faisant partie de l'arbre (20),
dans lequel l'élément de centrage (60, 60',60", 60"') appuie sur l'aimant (40) depuis l'extérieur en le centrant par rapport à l'axe de rotation (80) de l'arbre (20), et
dans lequel l'élément de centrage (60, 60',60", 60"') et l'aimant (40) sont reliés ensemble au moins en partie par ajustement serré ou ajustement fretté,
dans lequel l'élément de centrage (60, 60',60", 60"') présente une zone de type douille entourant l'aimant (40) au moins partiellement depuis l'extérieur,
**caractérisé par**
- au moins un anneau d'équilibrage (100, 100') disposé sur l'arbre (20),
dans lequel l'élément de centrage (60, 60',60", 60"') est solidaire de l'anneau d'équilibrage (100, 100'), et
dans lequel l'élément de centrage (60, 60',60", 60"') et l'anneau d'équilibrage (100, 100') sont réalisés d'une seule pièce.

2. Rotor selon la revendication 1, dans lequel l'aimant (40) est disposé sur la circonférence extérieure de l'arbre (20).

3. Rotor selon la revendication 1 ou 2, dans lequel l'anneau d'équilibrage (100, 100') est pressé sur l'arbre (20) ou fretté sur l'arbre (20).

4. Rotor selon l'une quelconque des revendications précédentes, dans lequel l'élément de centrage (60, 60',60", 60"') entoure l'aimant (40) sur l'étendue totale de l'aimant (40) le long de l'arbre (20).

5. Rotor selon l'une quelconque des revendications 1 à 3, dans lequel l'élément de centrage (60, 60',60", 60"') n'entoure l'aimant (40) que sur une partie de l'étendue totale de l'aimant (40) le long de l'arbre (20).

6. Rotor selon l'une quelconque des revendications précédentes, dans lequel un joint adhésif est prévu entre l'arbre (20) et l'aimant (40).

7. Moteur électrique, comprenant un rotor selon l'une quelconque des revendications précédentes.

8. Pièce à main dentaire, comprenant un moteur électrique selon la revendication 7.
